# FASCICULE DE BREVET EUROPEEN

(11) **EP 3 582 090 B1**
(45) Date de publication et mention de la délivrance du brevet: **02.12.2020**
(21) Numéro de dépôt: 19179642.4
(22) Date de dépôt: 12.06.2019
(51) Int. Cl.: G06F 3/041, G06F 3/039, G06F 3/044, G06F 3/0488, G06F 21/31, G06F 21/83

(54) **DISPOSITIF DE SAISIE DE DONNÉES DESTINÉ A ÊTRE APPOSÉ SUR UNE DALLE TACTILE D'UN TERMINAL, PROCÉDÉ ET SYSTÈME DE SAISIE CORRESPONDANTS**
DATENERFASSUNGSVORRICHTUNG ZUR AUFLAGE AUF EINE BERÜHRUNGSEMPFINDLICHE PLATTE EINES ENDGERÄTS, ENTSPRECHENDES DATENERFASSUNGVERFAHREN UND -SYSTEM
DEVICE FOR ENTRY OF DATA DESIGNED TO BE AFFIXED TO A TOUCHPAD OF A TERMINAL, CORRESPONDING INPUT METHOD AND SYSTEM

(30) Priorité: 15.06.2018 FR 1855293
(43) Date de publication de la demande: 18.12.2019
(73) Titulaire: INGENICO GROUP, 75015 Paris (FR)
(72) Inventeur: PAVAGEAU, Ste phane, 26600 LA ROCHE DE GLUN (FR); CARABELLI, Andre, 07130 SAINT-PERAY (FR); POUHAER, Benoît, 92160 ANTONY (FR)
(74) Mandataire: Vidon Brevets & Stratégie

(56) Documents cités:
- EP-A1- 2 270 639
- FR-A1- 3 055 990
- US-A1- 2015 242 612
- US-A1- 2017 168 634
- US-A1- 2018 024 672
- US-B1- 9 965 116

## Description

### 1. DOMAINE TECHNIQUE

La présente technique se rapporte au domaine de la saisie de données sur des terminaux (téléphones mobiles, ordinateurs, tablettes, terminaux de paiement, distributeurs automatiques de billets (DAB), terminaux de communication qui se transforment provisoirement en terminaux de paiement, etc.).

Plus précisément, la présente technique concerne un système de saisie de données comprenant une dalle tactile d'un terminal et un dispositif de saisie de données destiné à être apposé sur cette dalle tactile (aussi appelée « écran tactile », ou encore « touch screen » ou « touch panel » en anglais).

La présente technique s'applique notamment, mais non exclusivement, à la saisie de codes confidentiels ou de codes d'identification personnels (ou code PIN pour « Personal Identification Number » en anglais) sur une dalle tactile d'un terminal, par exemple pour les personnes malvoyantes.

### 2. ARRIÈRE-PLAN TECHNOLOGIQUE

Les écrans tactiles sont largement utilisés pour saisir des données au sein de systèmes informatisés de traitement de données. Par exemple, les téléphones mobiles, les ordinateurs, les tablettes, ou encore les terminaux de paiement et les distributeurs automatiques de billets (DAB) disposent d'écrans tactiles pour faciliter la saisie des données par les utilisateurs.

Pour effectuer une saisie, un utilisateur peut sélectionner une ou plusieurs touches (associées chacune à un caractère alphanumérique) sur un clavier virtuel affiché sur l'écran tactile, en utilisant un doigt ou un stylet. Il n'est ainsi plus nécessaire de disposer d'un clavier physique pour saisir des données. Cependant, la saisie des données avec un clavier virtuel présente des inconvénients, notamment pour les personnes malvoyantes, mais également pour les personnes technophobes ou peu coutumières des usages numériques. Notamment, à la différence des claviers physiques, les claviers virtuels sont affichés sur un écran plat et ne permettent pas à certains utilisateurs (notamment aux personnes malvoyantes) de se repérer spatialement sur les touches virtuelles.

Cet inconvénient est en particulier gênant pour les terminaux de paiement ou les distributeurs automatiques de billets (DAB) qui disposent d'un écran tactile. En effet, lorsqu'un utilisateur utilise sa carte bancaire pour effectuer un paiement ou pour retirer des billets, il doit saisir son code PIN pour s'authentifier. Il n'est pas possible pour une personne malvoyante de saisir son code PIN sur un clavier virtuel affiché sur un écran tactile.

Une directive européenne (en cours de rédaction) obligera prochainement les commerçants et banquiers à fournir une solution pour les personnes malvoyantes. La solution de l'état de la technique consiste à fournir toujours un clavier physique électronique relié à un terminal de paiement, même si un clavier virtuel est disponible sur l'écran tactile. Le coût de fabrication des terminaux de paiement ou des distributeurs automatiques de billets (DAB) est ainsi augmenté, sans que la solution soit réellement intéressante, notamment des points de vue technique et esthétique. En effet, le clavier physique destiné aux personnes malvoyantes doit être sécurisé pour éviter le piratage, augmentant le coût, et ce clavier n'est généralement pas esthétiquement intégré dans la solution tactile.

Par ailleurs, en sus des problématiques d'esthétique et de coût, il existe également une problématique importante de sécurité. En effet, à la différence d'un utilisateur standard, les personnes vulnérables, comme les personnes malvoyantes, doivent souvent solliciter l'aide de personnes qu'elles ne connaissent pas nécessairement. Ceci est une grande source de stress pour ces personnes vulnérables. Lorsqu'il s'agit par exemple de taper un code PIN, et donc de révéler une information sensible, il est nécessaire de s'assurer que la personne dont on sollicite éventuellement l'aide ne va pas tenter de conserver cette information pour une utilisation frauduleuse.

De la même manière, de nombreux utilisateurs ne sont pas en mesure de détecter et combattre efficacement les applications et logiciels espions qui sont installés sur leurs terminaux de communication. Or de plus en plus de terminaux de communication sont utilisés à des fins de saisie d'informations confidentielles et notamment d'informations de paiement (code PIN, comptes bancaires, etc.). Pour contrer ces problèmes de fraude, les solutions existantes proposent un affichage aléatoire du clavier virtuel ; dans un tel affichage aléatoire, les touches du clavier sont disposées aléatoirement et l'utilisateur doit identifier les touches pour pouvoir saisir ses données confidentielles (par exemple le code PIN). Une application sécurisée, installée sur le terminal de communication, se charge de réaliser la correspondance entre les zones de saisie de l'utilisateur et les caractères correspondants. On comprend bien qu'une telle manière de faire n'est pas adaptée pour de nombreux utilisateurs, et notamment pour les personnes malvoyantes ou plus généralement pour les personnes en rupture par rapport à la numérisation de ces opérations de saisies sur écran tactile.

US 9 965 111 B1 divulgue un système de l'art antérieur de saisie de données comprenant une dalle tactile capacitive d'un terminal et un dispositif de saisie de données destiné à être apposé sur ladite dalle tactile.

Il existe ainsi un besoin de fournir une solution permettant aux utilisateurs de saisir des données confidentielles sur des terminaux (terminaux de paiement et terminaux de communication par exemple) comprenant un écran tactile, en assurant la sécurité des données saisies, tout en réduisant le coût de cette solution et conservant l'aspect esthétique engendré par l'utilisation d'écran tactiles.

### 3. RÉSUMÉ

L'invention permet notamment de faciliter les opérations de saisie de données sur un écran tactile (aussi appelé dalle tactile), notamment pour les personnes malvoyantes. La solution de l'invention n'est cependant pas limitée à une utilisation par une personne malvoyante et peut être utilisée par toute personne pour la saisie, de manière simple, ergonomique et sécurisée, d'informations (confidentielles ou non) sur un écran tactile.

Dans un mode de réalisation particulier de l'invention, il est proposé un système de saisie de données comprenant une dalle tactile d'un terminal et un dispositif de saisie de données destiné à être apposé sur ladite dalle tactile, ladite dalle tactile étant capacitive, comprenant des électrodes en lignes et en colonnes formant une matrice d'électrodes comprenant des nœuds, et étant pilotée par une unité de contrôle configurée pour effectuer des cycles de balayage capacitif et de mesure des variations de capacité des nœuds par rapport à des valeurs de référence, détecter des appuis significatifs sur la dalle tactile en fonction des variations de capacité mesurées, et ré-étalonner les valeurs de référence en fonction des variations de capacité mesurées. Le système comprend :
- une plaque globalement parallélépipédique comprenant une face inférieure, globalement plane, d'apposition du dispositif sur la dalle tactile, et une face supérieure comprenant une matrice de zones de saisie formant clavier, les zones de saisie ayant une épaisseur configurée pour permettre une détection d'un doigt par la dalle tactile quand le dispositif est apposé sur la dalle tactile ;
- au moins une pastille de contact, plane, conductrice électriquement et solidaire de la face inférieure, ladite au moins une pastille de contact ayant une capacité lui permettant d'être détectée comme appui significatif ; et
- un réseau de pistes conductrices, s'étendant sur au moins une partie de la face supérieure et étant relié électriquement à ladite au moins une pastille de contact, le réseau de pistes conductrices ayant une capacité lui permettant de ne pas être détecté comme appui significatif et occupant une surface d'une part plus grande que la surface occupée par ladite au moins une pastille de contact et d'autre part suffisante pour que, lors des cycles de balayage capacitif, le réseau de pistes conductrices interagisse avec plusieurs nœuds de la matrice d'électrodes sous la forme de charges qui vont et viennent dans le réseau de pistes conductrices ainsi qu'entre ladite au moins une pastille de contact et le réseau de pistes conductrices, ce qui change la charge du réseau de pistes conductrices et de ladite au moins une pastille de contact et par conséquent, pour les nœuds de la matrice d'électrodes situés en regard du réseau de pistes conductrices et de ladite au moins une pastille de contact, dits nœuds concernés, l'unité de contrôle mesure des variations de capacité qui ne sont pas fixes sur des cycles successifs et décide donc de ne pas procéder à un réétalonnage des valeurs de référence pour les nœuds concernés.

La solution proposée repose donc sur une approche tout à fait nouvelle et inventive, consistant à fournir un dispositif de saisie destiné à être apposé sur la dalle tactile d'un terminal, pour obtenir un système dont le fonctionnement est le suivant :
- grâce à la détection de la ou les pastilles de contact (ou « contact pad » en anglais), présente(s) sur la face inférieure du dispositif de saisie et venant en contact avec la dalle tactile quand le dispositif est apposée sur celle-ci, le terminal peut détecter cette apposition, ainsi que l'orientation du dispositif sur la dalle tactile (plusieurs solutions pour déterminer cette orientation sont détaillés ci-après) ; puis
- connaissant l'orientation du dispositif sur la dalle tactile, et donc la position sur la dalle tactile de chacune des zones de saisie (formant touches de saisie) du dispositif, le terminal peut, à chaque fois qu'il détecte un appui d'un doigt de l'utilisateur sur la dalle tactile à travers l'une des zones de saisie du dispositif, déterminer à quel caractère de clavier (par exemple parmi les chiffres 0 à 9) ou fonction de clavier (par exemple parmi « annulation », « effacement » et « validation ») correspond cet appui.

Comme détaillé par la suite, en relation avec les figures, la détection de la ou les pastilles de contact (en tant qu'appui(s) significatifs) sur la dalle tactile) est maintenue possible grâce au réseau de pistes conductrices présent sur la face supérieure du dispositif de saisie et relié électriquement à la ou les pastilles de contact. En effet, le réseau de pistes conductrices permet d'éviter que le terminal effectue un réétalonnage de la dalle tactile, c'est-à-dire un réétalonnage (une mise à jour), au bout de quelques cycles de balayage capacitif, d'une ou plusieurs des valeurs de référence associées aux nœuds de la matrice d'électrodes de la dalle tactile capacitive. Le mécanisme de réétalonnage de la dalle tactile vise à compenser (et si possible faire disparaître), dans les résultats de détection, tout objet électriquement conducteur (par exemple une goutte d'eau) qui vient en contact avec la dalle tactile et qui a un comportement trop stable, et constitue donc un bruit additionnel à supprimer (contrairement à un appui du doigt de l'utilisateur). Par conséquent, s'il n'était pas empêché, le réétalonnage de la dalle tactile rendrait « invisibles » (c'est-à-dire non détectées) la ou les pastilles de contact (en tant que bruit additionnel). Le mécanisme de réétalonnage de la dalle tactile, et la manière dont le réseau de pistes conductrices permet de l'éviter, sont présentés en détail plus bas.

Ainsi, la solution proposée permet de s'affranchir de l'utilisation d'un clavier physique, tout en permettant une saisie d'informations :
- simple et ergonomique, grâce à un repérage aisé des zones de saisie du dispositif (notamment mais non exclusivement par une personne malvoyante), et
- sécurisée, puisqu'elle ne nécessite pas la sollicitation d'un tiers par l'utilisateur et qu'il n'y a pas de traces de doigts sur la dalle tactile (qui pourraient aider un fraudeur à retrouver un code venant d'être saisi). La sécurisation peut encore être accrue dans le cas (décrit en détail plus bas) où après avoir détecté l'apposition du dispositif sur la dalle tactile, le terminal bascule dans un mode de saisie adapté (appelé ci-après « mode aveugle ») dans lequel aucun clavier virtuel n'est affiché sur la dalle tactile.

En outre, le dispositif de saisie peut être un objet personnel, ce qui est un avantage en matière d'hygiène pour un objet qui se touche. Dans le cas d'un objet partagé, il peut être envisagé que le dispositif de saisie soit en matière « anti bactérienne » (par exemple une matière avec un additif type ion argent, comme dans les réfrigérateurs).

Un avantage additionnel d'un accessoire individuel, est que l'utilisateur est assuré qu'aucun dispositif espion n'a été ajouté dans le dispositif pour venir lui récupérer son code PIN.

Dans une première implémentation particulière, la face inférieure comprend au moins deux pastilles de contact.

Ainsi, quand le dispositif de saisie est apposé sur la dalle tactile, le terminal détecte les pastilles de contact, et par analyse des résultats de cette détection (nombre et forme des pastilles, distance entre elles) en déduit la présence, la position et l'orientation modulo 180° du dispositif sur la dalle tactile. Ceci suppose que le terminal connaît le nombre de pastilles de contact, leurs formes, les distances entre celles-ci, et leurs positions au sein de la géométrie du dispositif de saisie.

Si le terminal est petit, on peut supposer que le dispositif de saisie est bien positionné. Donc, dans ce cas, on peut supposer une orientation (levée de l'ambiguïté du modulo 180°). C'est acceptable, car lors de l'appui sur une touche, si cela ne fonctionne pas, on s'en rendra compte de suite.

Dans une variante, le dispositif de saisie comprend une unique pastille de contact, ayant une forme particulière (par exemple oblongue ou rectangulaire, avec une longueur suffisante) permettant de l'identifier et d'en connaître l'orientation (et de là également l'orientation du dispositif de saisie).

Selon une caractéristique particulière de la première implémentation, lesdites au moins deux pastilles de contact possèdent des formes différentes.

Ainsi, le terminal peut détecter l'orientation du dispositif de saisie sans le modulo 180°. En d'autres termes, on peut déduire la bonne orientation, même avec deux pastilles de contact, à condition que la deuxième pastille soit de forme très différente de la première (comme un cercle (ou un carré) pour l'une, et un rectangle dont la longueur est deux fois sa largeur pour l'autre).

Dans une deuxième implémentation particulière, la face inférieure comprend au moins trois pastilles de contact.

Ainsi, le terminal peut détecter l'orientation du dispositif de saisie sans le modulo 180°. En effet, l'ensemble des au moins trois pastilles de contact forment une signature (géométrie triangulaire particulière ; triangle plat dans une implémentation particulière) propre au dispositif de saisie de données, qui peut être détectée et reconnue par le terminal quand le dispositif est apposé sur la dalle tactile.

Selon une caractéristique particulière, la matrice de zones de saisie formant clavier comprend un ensemble de touches de saisie qui sont globalement planes, formées sur la surface supérieure et séparées entre elles par une grille de profilés de hauteurs et/ou de formes prédéterminées, et le réseau de pistes conductrices est formé en partie haute de la grille de profilés.

Ainsi, l'utilisateur (notamment une personne malvoyante) se repère à l'aide de la grille de profilés qui délimitent les touches les unes par rapport aux autres, en fonction des formes et/ou des hauteurs de ces profilés. Dans une implémentation particulière, la touche cinq n'a pas la même hauteur que les autres touches numériques et/ou la hauteur des touches numériques n'est pas la même que celle des touches de fonction, pour faciliter encore le repérage des touches par l'utilisateur. Dans une implémentation particulière, les touches de saisie ne comprennent aucune indication spécifique quant à leur fonction, de façon à renforcer la sécurité en évitant qu'une personne malveillante surveille les touches qui sont utilisées pour la saisie.

Plusieurs avantages découlent de la formation du réseau de pistes conductrices en partie haute de la grille de profilés :
- le réseau de pistes conductrices peut s'étendre sur une partie substantielle de la face supérieure du dispositif de saisie (car en pratique la grille de profilés occupe la quasi-totalité de la face supérieure du dispositif de saisie), et donc interagir avec plusieurs nœuds de la matrice d'électrodes de la dalle tactile (le réseau de pistes conductrices provoque des transferts de charge, synchrones du balayage de la dalle et donc non stables) et donc meilleure efficacité pour éviter que le terminal effectue un réétalonnage de la dalle tactile) ;
- dans la phase de saisie de données par l'utilisateur (c'est-à-dire après que le terminal a détecté la présence et l'orientation du dispositif de saisie sur la dalle tactile), le réseau de pistes conductrices améliore la détection de la ou les pastilles de contact, puisque pour toucher les touches de saisie le doigt de l'utilisateur touche (ou approche s'il y a un vernis protecteur) le réseau de pistes conductrices, qui est lui-même en contact électrique avec la ou les pastilles de contact. Par conséquent, lors des cycles de balayage capacitif, des charges ne sont pas transférées (ou attirées) seulement par la ou les pastilles de contact mais également par le doigt de l'utilisateur. Donc la modification locale du champ électrique est plus importante (on magnifie ainsi le signal aux localisations des pastilles) que pendant la phase initiale de détection du dispositif de saisie (au cours de laquelle l'utilisateur ne touche (ou n'approche) généralement pas/plus le réseau de pistes conductrices après avoir apposé le dispositif de saisie sur la dalle tactile). On rappelle que le doigt n'a pas besoin de toucher : on a une capacité entre le doigt de l'utilisateur et le réseau de pistes conductrices. Cela se comporte comme deux capacités en série : une première capacité entre la dalle tactile et les pastilles de contact, une deuxième capacité entre le réseau de pistes conductrices et le doigt de l'utilisateur, et entre ces première et deuxième capacités la résistance des éléments conducteurs reliant les pastilles de contact et le réseau de pistes conductrices.

Selon une caractéristique particulière, le réseau de pistes conductrices et la face inférieure sont séparés par une distance comprise entre 1,5 mm et 4,5 mm, et les pistes conductrices possèdent une largeur comprise entre 0,5 mm et 2 mm.

Ainsi, le réseau de pistes conductrices possède une capacité par rapport à l'écran tactile, assez faible pour qu'il ne soit pas détecté comme un appui significatif, mais suffisante pour que son interaction avec la dalle tactile permette d'éviter un réétalonnage de celle-ci. De plus, la hauteur du réseau de pistes conductrices (par rapport à la dalle tactile) permet d'avoir, quelle que soit la position du dispositif de saisie (en X/Y) sur la dalle tactile, une distance par rapport aux électrodes de la dalle tactile, assez importante, et quasi constante.

Selon une caractéristique particulière, la face inférieure comprend au moins deux pastilles de contact, et le réseau de pistes conductrices possède une résistance, entre pastilles de contact, comprise entre 20 Ω et 150 kΩ.

Ainsi, on améliore la réactivité de la matrice de zones de saisie formant clavier.

Dans une première implémentation particulière du réseau de pistes conductrices, le réseau de pistes conductrices est imprimé sur la face supérieure et recouvert d'une couche non conductrice, protectrice contre l'abrasion.

Diverses techniques permettent cette première implémentation. Par exemple, l'impression des pistes conductrices est effectuée par sérigraphie (film sérigraphié à l'envers, puis surmoulé) et la couche protectrice est un vernis. On rappelle que malgré le fait que l'utilisateur ne touche pas directement le réseau de pistes conductrices, il en approche son doigt à une distance très faible. Par conséquent, il existe une capacité faible entre le réseau de pistes conductrices et le doigt de l'utilisateur, qui est en série avec une autre capacité (celle entre la dalle tactile et les pastilles de contact) via le réseau de pistes conductrices (dont la résistance change le circuit RC).

Dans une deuxième implémentation particulière du réseau de pistes conductrices, le réseau de pistes conductrices est réalisé en matière conductrice épaisse ayant une épaisseur d'au moins 0,3 mm.

Diverses techniques permettent cette deuxième implémentation. Par exemple, la matière conductrice épaisse est une matière silicone chargée carbone, réalisée par co-moulage (insert conducteur dans un moule silicone).

Selon une caractéristique particulière, la plaque est constituée d'une matière isolante électriquement.

Ainsi, on évite que la plaque (i.e. le corps principal du dispositif de saisie) présente une capacité (sur toute sa surface) détectée par la dalle.

Dans une première implémentation particulière de la plaque, la plaque est constituée de matière plastique rigide et transparente.

Ainsi, le dispositif de saisie est sécuritaire. En effet, du fait de la transparence de la plaque, il n'est pas possible d'y adjoindre des mécanismes frauduleux de surveillance des saisies. En effet, si de tels mécanismes étaient ajoutés, ils seraient immédiatement détectés.

Selon une caractéristique particulière de la première implémentation particulière de la plaque, la face inférieure possède quatre angles et comprend, dans au moins deux angles adjacents parmi lesdits angles, un pied globalement plan d'épaisseur comprise entre 0,1 et 0,4 mm. Dans une implémentation particulière, la face inférieure comprend un pied dans chacun des deux angles « du haut » (dans le plan de la face supérieure de la plaque), ce qui évite un boitement du dispositif de saisie, que la plaque soit concave ou convexe. Les angles « du bas » (dans le plan de la face supérieure de la plaque) sont par exemple alignés avec la ou les pastilles de contact. Dans une variante, la face inférieure comprend en outre un pied dans chacun des deux angles « du bas » (soit quatre pieds au total).

De cette façon, quand le dispositif de saisie de données est apposé sur la dalle tactile, les pieds garantissent que la ou les pastille(s) de contact est (sont) bien en contact avec la dalle tactile, même si la plaque n'est pas parfaitement plane (la hauteur des pieds est adaptée à la planéité de la plaque).

Dans une deuxième implémentation particulière de la plaque, la plaque est constituée de silicone translucide, permettant de se déformer et de s'adapter parfaitement à la planéité de la dalle tactile.

Ainsi, quand le dispositif de saisie de données est apposé sur la dalle tactile, la ou les pastille(s) de contact est (sont) bien en contact avec la dalle tactile. L'aspect translucide permet également de vérifier qu'aucun mécanisme frauduleux n'est inséré.

En outre, le fait d'utiliser du silicone, permet d'avoir un coefficient de frottement important par rapport à la dalle, et donc permet de limiter les translations non désirées, et donc facilite la saisie du code. En d'autres termes, le silicone permet d'adhérer à la dalle tactile (même sans ventouse) et cela aide vraiment les malvoyants/non-voyants.

Selon une caractéristique particulière, le dispositif de saisie comprend au moins une ventouse et/ou au moins un pied anti-glissement réalisé dans un matériau antidérapant, solidaire(s) de la face inférieure et destiné(s) à venir en contact avec la dalle tactile.

Ainsi, le dispositif de saisie peut être maintenu contre la dalle tactile, même si celle-ci n'est pas disposée à plat (dalle tactile en pente). Elle permet, en outre, que la recherche de localisation, par la personne malvoyante, ne fasse pas glisser le dispositif de saisie hors de la zone active de la dalle tactile (ce qui serait très désorientant pour une personne aveugle.

Selon une caractéristique particulière, la plaque est sensiblement aux dimensions d'une carte bancaire, en longueur et largeur.

Le choix des dimensions d'une carte bancaire (54 mm x 85 mm), à quelques millimètres près (par exemple ± 2 ou 3 mm), présente plusieurs avantages :
- cela représente une surface suffisante pour que le réseau de pistes conductrices perturbe suffisamment les détections capacitives de la dalle tactile et donc que celle-ci ne se ré-étalonne pas d'elle-même ;
- cette surface permet d'avoir des zones de saisie (touches) suffisamment grandes ;
- cela permet au dispositif de saisie d'être placé dans un portefeuille ou un porte-carte, et donc de transformer le dispositif de saisie en accessoire individuel ;
- le dispositif de saisie lui-même peut servir de porte-carte bancaire pour les aveugles (via par exemple des charnières, des glissières, etc.).

Selon une caractéristique particulière, la matrice de zones de saisie formant clavier est représentative d'un clavier de saisie d'un code confidentiel sur un terminal de paiement.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre un dispositif de saisie de données et un terminal selon un premier mode de réalisation de l'invention ;
- les figures 2A et 2B sont des vues détaillées, de la face supérieure et de la face inférieure respectivement, du dispositif de saisie de la figure 1 ;
- la figure 3 est vue d'une partie de la figure 2A, détaillant la grille de profilés et le réseau de pistes conductrices apparaissant sur la figure 2A ;
- la figure 4 est une vue en coupe du dispositif de saisie de données, au niveau de la troisième rangée de touches, présentant un mode de réalisation de la grille de profilés ;
- la figure 5 est vue détaillée d'une partie de la figure 2B, illustrant une pastille de contact et deux pieds ;
- la figure 6 illustre une première variante du jeu de pastilles de contact ;
- la figure 7 illustre une deuxième variante du jeu de pastilles de contact ;
- la figure 8 présente un exemple de structure du terminal de la figure 1 ;
- la figure 9 présente un organigramme d'un procédé selon un mode de réalisation particulier de l'invention, exécuté par le terminal ;
- la figure 10 illustre un dispositif de saisie de données, selon un deuxième mode de réalisation de l'invention ; et
- la figure 11 illustre une variante dans laquelle la face inférieure comprend deux pieds anti-glissement.

### 5. DESCRIPTION DÉTAILLÉE

Sur toutes les figures du présent document, les éléments et étapes identiques sont désignés par une même référence numérique.

### 5.1 Rappels sur les dalles tactiles capacitives

Il existe plusieurs technologies exploitant les phénomènes capacitifs pour détecter la position d'un doigt sur une dalle tactile. Les deux technologies les plus répandues sont la technologie capacitive de surface (« Surface Capacitive » en anglais) et la technologie capacitive projetée (PCT ou PCAP, pour « Projected Capacitive Touch » en anglais). Pour la deuxième, on distingue généralement deux sous-catégories : la technologie capacitive intrinsèque projetée (« Self Capacitance » en anglais) et la technologie capacitive mutuelle projetée (« Mutual capacitance » en anglais).

### 5.1.1 La technologie capacitive de surface

La manière la plus simple de fabriquer une dalle tactile capacitive est de recouvrir un côté de l'écran d'une couche transparente conductrice, par exemple en oxyde d'étain-indium (ITO). Une légère tension est appliquée aux quatre coins de la dalle, ce qui crée un champ électrique uniforme. Lorsqu'un doigt touche l'autre côté du verre, le contrôleur (aussi appelé unité de contrôle, processeur ou microprocesseur) de la dalle peut déterminer l'emplacement de l'entrée tactile en analysant le changement de capacitance mesuré à partir des changements de tension dans les quatre coins du panneau. Il n'est pas possible de reconnaître de multiples points d'entrée tactile (« multi-touch »). La détection intempestive de fausses entrées, causée par des signaux inattendus issus de l'environnement, peut aussi être un problème.

### 5.1.2 La technologie capacitive projetée

Dans la technologie capacitive projetée, des électrodes (fils conducteurs) sont appliquées en lignes et colonnes sur deux feuilles de verre parallèles, ce qui forme une grille d'électrodes. Une tension est appliquée de manière séquentielle aux lignes et colonnes d'électrodes. Le contrôleur identifie l'emplacement de l'entrée tactile en mesurant le changement de capacité dans la grille d'électrodes.

### 5.1.2.a) La technologie capacitive intrinsèque projetée

Une dalle tactile selon la technologie capacitive intrinsèque projetée est similaire à une dalle à capacité de surface, mais les deux couches d'ITO sont gravées : avec des électrodes en lignes sur une face et des électrodes en colonne sur l'autre face. Le contrôleur mesure la capacité de chaque électrode (en ligne comme en colonne) par rapport à un signal de référence (le plus souvent la masse). Le principe de variation de capacité est identique à la technologie de capacité de surface. Les lignes et les colonnes sont balayées et la capacité équivalente est mesurée pour chaque électrode. Chaque ligne et chaque colonne opérant indépendamment, cette technologie ne permet pas détecter simultanément plusieurs points d'activations. Des phénomènes fantômes peuvent apparaître quand deux doigts sont sur la dalle tactile. Pour satisfaire la demande des marchés, cette technologie a été améliorée pour fournir des solutions multipoints sans phénomène fantôme.

### 5.1.2.b) La technologie capacitive mutuelle projetée

La structure d'une dalle tactile selon la technologie capacitive mutuelle projetée est identique à celle selon la technologie capacitive intrinsèque projetée, mais la détection multipoints est possible grâce à la méthode d'acquisition du contrôleur. Ce dernier mesure la capacité entre un couple d'électrode comprenant une électrode X (ligne) et une électrode Y (colonne). Sans activation, la capacité entre ce couple d'électrodes reste constante. Quand le doigt est à proximité d'une électrode, la capacité varie. Dans certaines implémentations, les électrodes X et Y sont sur la même face et à chaque croisement les électrodes sont isolées par une couche isolante. La mesure de la variation de capacité entre chaque couple d'électrodes X et Y permet de déterminer les coordonnées x et y de la zone d'activation.

En d'autres termes, la dalle tactile comprend des électrodes en lignes et en colonnes formant une matrice d'électrodes comprenant des nœuds. Le contrôleur (unité de contrôle) effectue des cycles de balayage capacitif afin de mesurer des variations de capacité des nœuds par rapport à des valeurs de référence et détecter des appuis significatifs sur la dalle tactile en fonction des variations de capacité mesurées. Pour chaque nœud, le contrôleur effectue une comparaison entre la variation de capacité et un seuil de variation. En fonction des nœuds où la variation de capacité est importante, et de la ou les surfaces qu'ils forment, le contrôleur prend une décision et fournit un résultat indiquant si un ou plusieurs appuis significatifs sur la dalle tactile (par un élément conducteur électriquement, comme un doigt ou un stylet) ont été détectés.

Le document de brevet WO2011/0849917A2 décrit un exemple d'implémentation d'une dalle tactile selon la technologie capacitive mutuelle projetée.

Pour la décision par le contrôleur, le seuil comme la surface sont des paramètres qui dépendent de la dalle. Par exemple, pour une dalle spécifique, imaginons des valeurs de références de l'ordre de 7000 unités. Si on place un doigt sur la dalle, la variation de capacité est de l'ordre de 1000, et plusieurs nœuds sont impactés (il y a donc une surface importante) : le contrôleur détecte le doigt. Si on place un stylet sur la dalle, la variation de capacité est de l'ordre de 300 (le caoutchouc est moins conducteur électriquement), et peu de nœuds sont impactés (il y a donc une surface faible) : le contrôleur détecte le stylet. Si on place la pointe d'une aiguille sur la dalle, même si la variation de capacité est très élevée, il n'y a qu'un seul nœud impliqué (la surface est trop faible et n'est pas dans le gabarit d'acceptation) : le contrôleur ne retient pas le point de contact de l'aiguille et ne détecte aucun appui significatif. Dans ces exemples, le doigt d'utilisateur (ou le stylet conducteur ou encore l'aiguille, relié à un utilisateur) se comporte comme une capacité parallèle, qui possède déjà une charge importante. En procédant au balayage de surveillance des capacités, cela fait un point d'évacuation des charges, facilement identifiable.

### 5.1.3 Réétalonnage de la dalle tactile (dans la technologie capacitive mutuelle projetée)

Comme indiqué plus haut, dans la technologie capacitive mutuelle projetée, le contrôleur surveille en permanence les variations de capacités aux nœuds de la matrice d'électrodes (en comparant chaque variation avec une valeur de référence), et indique si un ou plusieurs appuis significatifs sur la dalle tactile ont été détectés (en tenant compte d'une surface minimale, exprimée en nombre de nœuds, pour qu'un appui soit significatif).

Les valeurs de référence peuvent être revues en fonction des événements : c'est le réétalonnage de la dalle. Par exemple, si un objet conducteur vient en contact avec la dalle (par exemple une goutte d'eau), la variation de capacité pour les nœuds concernés est détectée très rapidement. Et donc un appui significatif (dont la surface correspond à celle de la zone de contact entre l'objet conducteur et la dalle) est retenu par le contrôleur. Par contre, au bout de quelques cycles de balayage capacitif, cette zone de contact, isolée du reste de la dalle, a été chargée par les balayages et est saturée : le contrôleur détecte que c'est un bruit additionnel, et revoit (augmente) les valeurs de référence pour les nœuds concernés de la dalle. Suite à ce changement de valeurs de référence, le contrôleur détecte, lors des cycles de balayage suivants, que pour les nœuds concernés la variation de capacité n'est plus supérieure au seuil de variation, et le contrôleur cesse de considérer qu'il s'agit d'un appui significatif.

En d'autres termes, dans la technologie capacitive mutuelle projetée, le contrôleur effectue un réétalonnage de la dalle tactile, c'est-à-dire une mise à jour, au bout de quelques cycles de balayage capacitif, d'une ou plusieurs des valeurs de référence associées aux nœuds de la matrice d'électrodes. Ceci permet de faire disparaître, dans les résultats de détection du contrôleur, tout objet électriquement conducteur (par exemple une goutte d'eau) qui vient en contact avec la dalle tactile et qui a un comportement trop stable, et constitue donc un bruit additionnel à supprimer (contrairement à un appui du doigt de l'utilisateur).

De même, si on approche la main d'une dalle capacitive, même en étant très loin (de l'ordre de quelques centimètres), la surface de la main étant très grande on a une capacité induite qui est mesurable. Cependant, le contrôleur, grâce au paramétrage de la dalle (grande surface, variation de capacité faible) peut ignorer cette surface.

Une dalle sans réétalonnage dynamique aura un fonctionnement erratique, tandis qu'une dalle avec trop de réétalonnage ne saura détecter des appuis avec des objets faiblement capacitifs. Le réétalonnage peut se faire sur une charge stable ou sur une surface minimale, au démarrage ou sur demande.

### 5.2 Premier mode de réalisation du dispositif de saisie

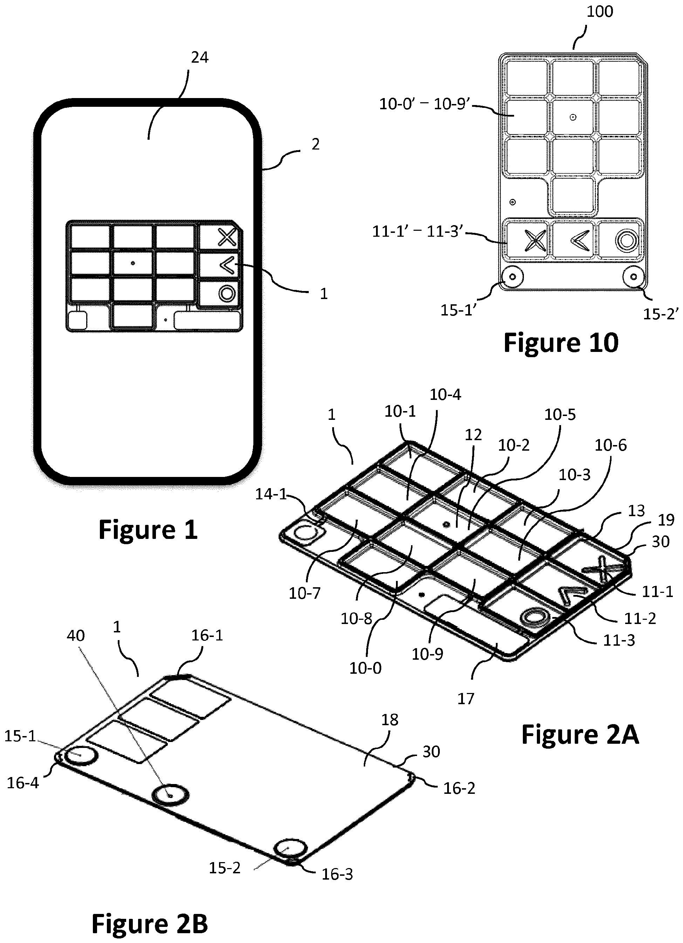

On décrit en relation avec les **figures 1 à 7****,** un dispositif de saisie de données 1 et un terminal 2 selon un premier mode de réalisation de l'invention.

Comme illustré sur la **figure 1****,** le dispositif de saisie de données 1 est destiné à être apposé sur une dalle tactile 24 du terminal 2 (il s'agit par exemple d'un terminal de communication faisant office de terminal de paiement). Le terminal 2 et le dispositif de saisie 1 constituent un système de saisie de données, notamment mais non exclusivement pour les personnes malvoyantes.

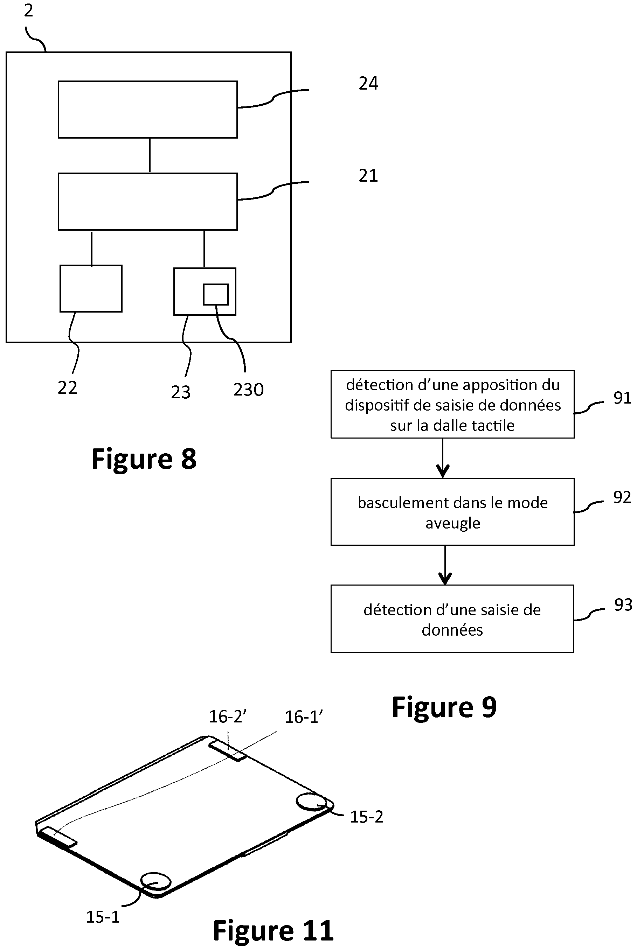

La dalle tactile 24 est une dalle tactile selon la technologie capacitive mutuelle projetée (voir description plus haut). Elle comprend des électrodes en lignes et en colonnes formant une matrice d'électrodes comprenant des nœuds. Elle est pilotée par un contrôleur (aussi appelé «unité de contrôle»), par exemple le processeur 21 du terminal 2 (voir figure 8), configuré pour : effectuer des cycles de balayage capacitif et de mesure des variations de capacité des nœuds par rapport à des valeurs de référence ; détecter des appuis significatifs sur la dalle tactile en fonction des variations de capacité mesurées ; et ré-étalonner les valeurs de référence en fonction des variations de capacité mesurées.

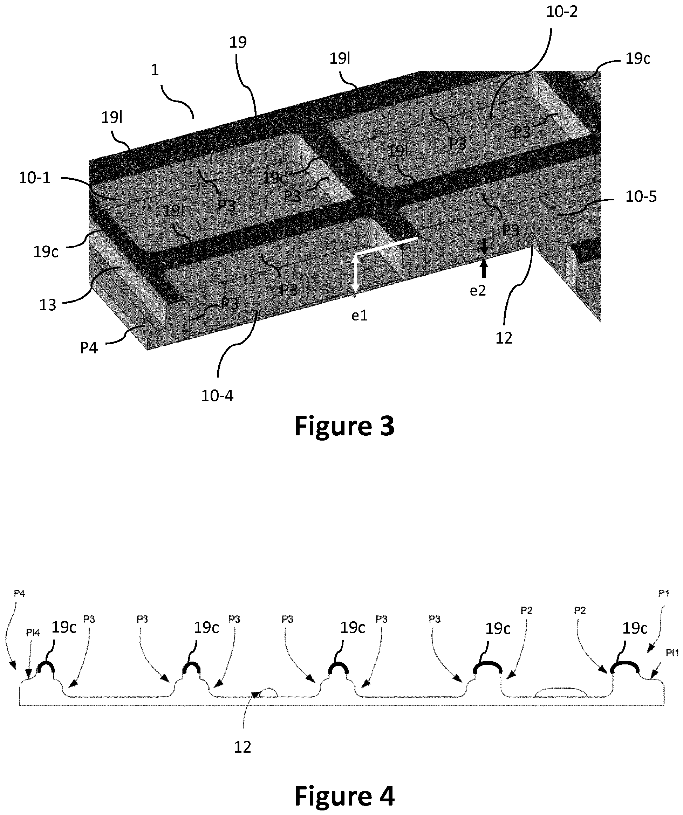

Comme illustré sur les **figures 2A et 2B****,** le dispositif de saisie de données 1 comprend :
- une plaque 30 globalement parallélépipédique comprenant une face inférieure 18, globalement plane, d'apposition du dispositif 1 sur la dalle tactile 24, et une face supérieure 17 comprenant une matrice de zones de saisie formant clavier, les zones de saisie 10-0 à 10-9 et 11-1 à 11-3 ayant une épaisseur configurée pour permettre une détection d'un doigt par la dalle tactile quand le dispositif est apposé sur la dalle tactile (sur la figure 3, l'épaisseur de la touche référencée 10-5 est notée e2 et est par exemple égale à 0,2 mm) ;
- deux pastilles de contact 15-1 et 15-2 (ou « contact pad » en anglais), qui sont planes, conductrices électriquement et solidaires de la face inférieure 18 de la plaque 30 ; et
- un réseau de pistes conductrices 19, qui s'étend sur au moins une partie de la face supérieure 17 de la plaque 30 et est relié électriquement aux pastilles de contact 15-1 et 15-2.

La matrice de zones de saisie comprend un ensemble de touches de saisie sensiblement rectangulaires regroupées dans un premier sous-ensemble et un deuxième sous-ensemble. L'ensemble de touches de saisie est représentatif d'un clavier de saisie d'un code confidentiel sur un terminal de paiement.

Le premier sous-ensemble comprend dix touches numériques 10-0 à 10-9 représentant les chiffres 0 à 9. Les touches numériques sont globalement planes et ne comprennent aucune indication spécifique quant aux chiffres qu'elles représentent. Cela permet d'éviter qu'une personne malveillante surveille les touches qui sont utilisées pour la saisie. La touche du chiffre cinq 10-5 comprend, en son centre, un téton de repérage 12. Les touches des chiffres 1 à 4 et 6 à 9 sont positionnées autour de la touche du chiffre 5, comme à l'accoutumée. Le fait de repérer la touche du chiffre 5 permet à l'utilisateur malvoyant de visualiser mentalement et rapidement les positions des autres touches numériques. Dans une implémentation particulière, il y a une différence d'épaisseur autour de la touche cinq, pour que, si la personne perd l'orientation, elle peut revenir à la touche cinq, sans appuyer à l'intérieur de la touche.

Le deuxième sous-ensemble comprend trois touches fonctionnelles : une touche d'annulation 11-1, une touche d'effacement (correction) 11-2 et une touche de validation 11-3. Les touches fonctionnelles comprennent des motifs embossés ou creusés indiquant les fonctions des touches. Par exemple, le motif « X » représente la fonction d'annulation, le motif « < » représente la fonction d'effacement, et le motif « O » représente la fonction de validation.

En résumé, dans le plan de la face supérieure 17 de la plaque 30, les dix touches numériques 10-0 à 10-9 sont disposées sur quatre lignes et trois colonnes, à gauche des trois touches fonctionnelles 11-1 à 11-3, elles-mêmes disposées sur une colonne.

Les touches de la matrice de zones de saisie sont séparées entre elles par une grille de profilés 13, de hauteurs et de formes prédéterminées. Les formes des profilés P1 à P4 de la grille de profilés 13 sont adaptées de sorte à former une pluralité de repères de positionnement des touches du clavier. Plus particulièrement, les profilés forment un ou plusieurs fils d'Ariane, qui permettent à un utilisateur malvoyant de repérer mentalement l'emplacement des touches. Par exemple, les profils forment un fil d'Ariane périphérique, sur tout le pourtour du dispositif de saisie, permettant de délimiter le volume externe du dispositif de saisie. Au niveau de chaque touche, des profils indiquent également l'emplacement de la touche.

De plus, dans une implémentation particulière, un coin du dispositif de saisie (par exemple en haut à droite) est biseauté et permet à l'utilisateur d'orienter, sans confusion possible, le dispositif de saisie.

L'épaisseur de la plaque 30 dans la zone des touches fonctionnelles est inférieure à celle dans la zone des touches numériques. Il y a ainsi un changement de niveau entre les touches numériques et les touches fonctionnelles. Ce changement de niveau permet aux personnes malvoyantes de repérer facilement les touches numériques et les touches fonctionnelles.

La **figure 4** est une illustration à titre d'exemple d'une coupe longitudinale possible du dispositif de saisie 1 de la figure 1, au niveau des touches centrales 10-4 à 10-6 et 11-2. Elle illustre un mode de réalisation des différents profilés P1 à P4 pour les touches. La **figure 3** illustre également les différents profilés P3 et P4 des touches 10-1, 10-2, 10-4 et 10-5. Un premier profilé P1 permet de déterminer le bord latéral droit du dispositif de saisie. Le profilé P2 de la touche de correction (voir figure 1) se présente sous la forme d'une pente verticale. Les profilés P3 des touches numériques ont globalement une forme de vague. Ils sont différents du profilé P2, permettant à l'utilisateur malvoyant de différentier les touches numériques des touches de fonction. Le profilé extérieur gauche P4 est également différent du profilé extérieur droit P1, notamment par la taille des plateaux (P14 vs Pl1), permettant ainsi à l'utilisateur de déterminer l'orientation du dispositif lorsqu'il est posé sur la dalle tactile. Le téton 13 de la touche cinq 10-5 est également visible sur cette touche et permet d'identifier rapidement la touche cinq.

La plaque 30 est constituée d'une matière isolante électriquement, afin de ne pas émettre une capacité parasite difficilement contrôlable.

Dans une implémentation particulière, la plaque est constituée de matière plastique rigide et transparente.

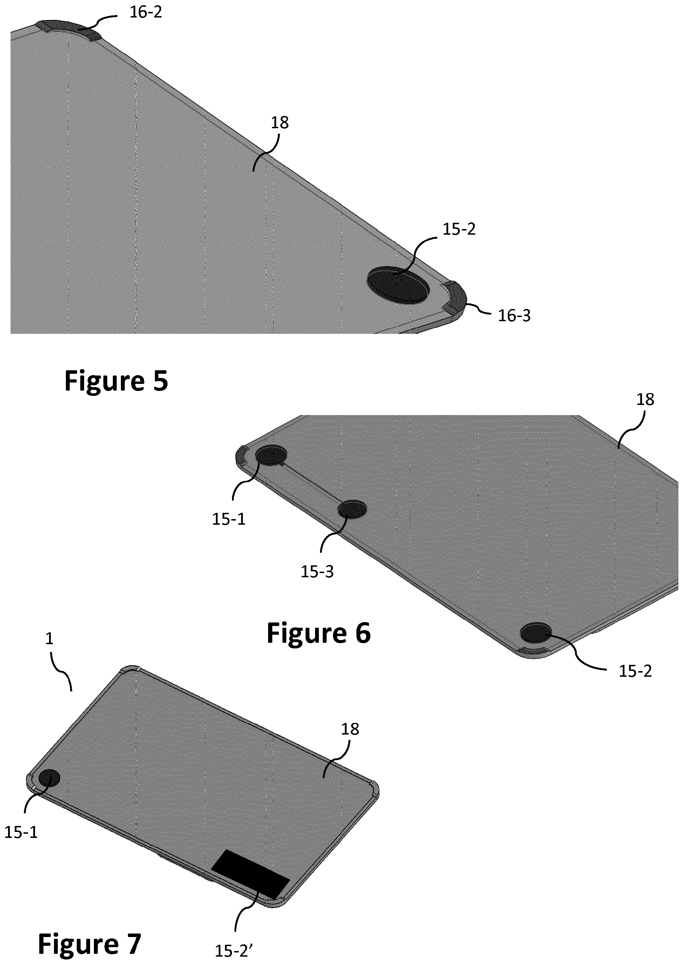

Optionnellement, comme illustré sur les **figures 2B** **et** **5****,** la face inférieure 18 de la plaque 30 comprend, dans chacun de ses quatre angles, un pied 16-1 à 16-4 globalement plan d'épaisseur comprise entre 0,1 et 0,4 mm. Les pieds visent à garantir que ce sont les pastilles de contact 15-1 et 15-2 qui appuient sur la dalle tactile 24, même si la plaque 30 est un peu tordue.

Dans une variante, la face inférieure comprend uniquement deux pieds, ceux référencés 16-1 et 16-2 (c'est-à-dire ceux situés dans les deux angles « du haut », dans le plan de la face supérieure de la plaque). Ceci évite un boitement du dispositif de saisie, que la plaque soit concave ou convexe.

Dans une implémentation particulière, illustrée sur la **figure 11****,** la face inférieure 18 de la plaque 30 comprend un ou plusieurs pieds anti-glissement 16-1' et 16-2', réalisé(s) dans un matériau antidérapant. Il s'agit par exemple d'un matériau avec de multiples picots, qui se comportent comme les filaments du Gecko (le lézard). Avec ce(s) pied(s) anti-glissement, une fois qu'on a posé le dispositif de saisie sur la dalle tactile 24, il ne bouge pas lors de la saisie. Ceci est particulièrement efficace sur le verre.

Optionnellement, la face inférieure 18 de la plaque 30 comprend, par exemple en son milieu, une ventouse (40) solidaire de la face inférieure et destinée à venir en contact avec la dalle tactile 24. Ceci permet d'utiliser le dispositif de saisie 1 même avec une dalle tactile 24 en pente, et de plus, d'éviter que cela ne glisse sur les terminaux classiques.

Dans une autre implémentation, la plaque 30 est constituée de silicone translucide non conducteur, dont la dureté est par exemple comprise entre 60 et 90 Shores A. Ainsi, la plaque peut se déformer et s'adapter parfaitement à la planéité de la dalle tactile (et donc a priori de ne pas nécessiter de pied). En d'autres termes, la réalisation de la plaque en silicone permet à celle-ci d'adhérer à la dalle tactile, d'être déformable sous son poids et avec une bonne mémoire de forme.

La plaque 30 est par exemple sensiblement aux dimensions d'une carte bancaire (54 mm x 85 mm, à quelques millimètres près). Cela permet de placer le dispositif de saisie 1 dans un portefeuille ou un porte-carte, au même endroit que la carte bancaire.

Les angles inférieurs, gauche et droite, de la face supérieure 17 de la plaque 3 ne comportent aucune touche. Ce sont dans les zones correspondantes (c'est-à-dire superposées) de la face inférieure 18 de la plaque 30 que sont positionnées les deux pastilles de contact 15-1 et 15-2.

Les deux pastilles de contact 15-1 et 15-2 sont très souples et planes, de façon à maximiser leur surface en contact avec la dalle tactile 24. Elles possèdent par exemple la forme d'un disque de diamètre compris entre 6 et 8 mm. Elles sont par exemple constituées de silicone conducteur, dont la dureté est comprise entre 40 et 80 Shores A. D'autres techniques peuvent être utilisées pour réaliser pastilles de contact : pièces métalliques, dessins réalisés avec des encres conductrices (directement sur la face inférieure de la plaque, ou sur un film lui-même ensuite reporté sur la face inférieure de la plaque), etc.

L'entraxe entre les pastilles de contact est déterminé et connu du contrôleur du terminal, qui peut ainsi, après avoir détecté les deux pastilles de contact (voir procédé décrit plus bas), détecter que le dispositif de saisie 1 a été apposé sur la dalle tactile 24. Le contrôleur peut également en déduire la position et l'orientation modulo 180° du dispositif de saisie 1 sur la dalle tactile 24.

Dans une première variante (illustrée sur la **figure 6**), le dispositif de saisie comprend au moins trois pastilles de contact 15-1, 15-2 et 15-3. Ainsi, le contrôleur peut détecter l'orientation du dispositif de saisie sans le modulo 180°. En outre, avec trois pastilles de contact, il y a moins de confusion possible avec un entraxe de doigts posés sur la dalle tactile.

Dans une deuxième variante (illustrée sur la **figure 7**), les deux pastilles de contact 15-1 et 15-2' possèdent des formes différentes (par exemple disque pour l'une et rectangle pour l'autre). Ainsi, le contrôleur peut également détecter l'orientation du dispositif de saisie sans le modulo 180°.

Dans une troisième variante (non représentée), le dispositif de saisie comprend une unique pastille de contact, ayant une forme particulière (par exemple oblongue ou rectangulaire, avec une longueur suffisante). Ainsi, le contrôleur peut identifier l'unique pastille de contact et en connaître l'orientation (modulo 180°) ; et de là également connaître l'orientation (modulo 180°) du dispositif de saisie quand il est apposé sur la dalle tactile.

Sur les **figures 2A****,** **3 et 4****,** le réseau de pistes conductrices 19 est représenté en noir. Il comprend des pistes disposées en lignes 191 et en colonnes 19c, qui forment un quadrillage sur une partie substantielle de la face supérieure 17 de la plaque 30.

Le réseau de pistes conductrices 19 est relié électriquement aux pastilles de contact 15-1 et 15-2 via des connexions électriques 14-1 (une seule connexion est visible sur la figure 2A) (par exemple des tronçons de pistes conductrices et des via). Dans une variante, les pastilles de contact 15-1 et 15-2 font l'épaisseur de la plaque (dans ce cas, les via ne sont pas nécessaires).

Dans l'implémentation particulière illustrée, le réseau de pistes conductrices 19 est formé en partie haute de la grille de profilés. En d'autres termes, chaque piste conductrice 19c, 191 est formée en partie haute d'un des profilés P1 à P4. Ainsi, on tire profit de la présence des profilés délimitant et séparant les touches de la matrice de zones de saisie.

On présente maintenant, à titre d'exemple, un jeu de caractéristiques du réseau de pistes conductrices 19 permettant d'avoir un bon fonctionnement avec une dalle tactile de taille de diagonale comprise entre 4" (10,2 cm) et 7" (17,8 cm), avec 14 lignes et 24 colonnes, et acceptant les stylets (donc capables de mesurer des variations de capacités faibles).

Le réseau de pistes conductrices 19 doit s'étendre sur une surface suffisamment importante, permettant ainsi d'agir avec plus de nœuds de la matrice d'électrodes (intersection lignes/colonnes) de la dalle tactile, et donc d'avoir une charge qui varie lors des balayages capacitifs. C'est notamment le cas quand le réseau de pistes conductrices 19 est formé en partie haute de la grille de profilés et que la plaque 30 est sensiblement aux dimensions d'une carte bancaire (c'est-à-dire approximativement 54 mm x 85 mm).

Le réseau de pistes conductrices 19 et la face inférieure 18 de la plaque 30 sont séparés par une distance (hauteur notée e1 sur la figure 3) comprise entre 1,5 mm et 4,5 mm. Les pistes conductrices possèdent une largeur comprise entre 0,5 mm et 2 mm.

Ainsi, le réseau de pistes conductrices possède une capacité faible, qui lui permet à la fois d'interagir avec la dalle tactile lors des balayages capacitifs (et de faire bouger les charges du réseau de pistes conductrices, ce qui évite un réétalonnage de la dalle tactile par le contrôleur), mais aussi de ne pas être détecté comme une variation de capacité significative (qui provoquerait la fausse détection d'un appui significatif).

On peut faire les pistes conductrices plus étroites, mais il faut les rapprocher de la dalle tactile. Inversement, on peut les faire les pistes conductrices plus larges, mais il faut les éloigner de la dalle tactile.

Il est cependant préférable de respecter la valeur minimale de la hauteur e1 (1,5 mm). En effet, vu que le dispositif de saisie a un placement libre sur la dalle tactile, et que les positions des nœuds de la matrice d'électrodes (intersection lignes/colonnes) de la dalle tactile ne sont pas connues, on peut avoir un alignement parfait d'une piste conductrice avec une électrode (ligne ou colonne) de la dalle tactile. Si c'est le cas, et si la distance entre cette piste conductrice et cette électrode est faible, alors la capacité entre ces deux éléments (piste et électrode) augmentera significativement, ce qui n'est pas souhaitable. Avec la valeur minimale de la hauteur e1, on reste avec une capacité faible pour le réseau de pistes conductrices.

La valeur maximale de la hauteur e1 (4 mm) peut (en théorie) être dépassée, mais là, c'est l'ergonomie, pour accéder au fond des touches, qui est impactée.

Dans une variante, la plage de valeurs de la hauteur e1 est respectée, mais le réseau de pistes conductrices 19 n'est pas formé en partie haute de la grille de profilés. Il est par exemple formé, sur le plan de la face supérieure 17 de la plaque 30, dans une zone jouxtant et/ou entourant celle où se trouvent les touches de la matrice de zones de saisie. Dans ce cas, la surface totale de la plaque 30 peut être augmentée par rapport à l'implémentation particulière illustrée.

Le réseau de pistes conductrices possède une résistance, entre pastilles de contact, comprise entre 20 Ω et 150 kΩ. Une résistance relativement faible permet d'améliorer la réactivité du dispositif de saisie 1.

Diverses techniques peuvent être utilisées pour réaliser le réseau de pistes conductrices, notamment (mais non exclusivement) :
- impression du réseau de pistes conductrices 19 (par exemple par tampographie avec encre d'argent) directement sur les parties hautes des profilés (qui sont par exemple en silicone non conducteur), puis ajout sur les pistes conductrices d'une couche non conductrice (non représentée), protectrice contre l'abrasion (par exemple un vernis non conducteur) ;
- réalisation du réseau de pistes conductrices 19 en matière conductrice (par exemple en silicone conducteur) et épaisse (ayant par exemple une épaisseur d'au moins 0,3 mm), puis surmoulage du réseau de pistes conductrices 19 sur la grille de profilés 13 ;
- impression du réseau de pistes conductrices 19 sur un film, puis report du film sur la grille de profilés 13 par thermoformage et/ou surmoulage ;
- etc.

En résumé, le réseau de pistes conductrices 19 est configuré pour que, quand le dispositif de saisie 1 est apposé sur la dalle tactile, et même en l'absence d'appui d'un doigt sur le réseau de pistes conductrices, le réseau de pistes conductrices interagit avec la dalle tactile lors des cycles de balayage capacitif, ce qui empêche un réétalonnage des valeurs de référence (qui lui-même empêcherait que chacune des pastilles de contact 15-1 et 15-2 soit détectées comme un appui significatif), sans que le réseau de pistes conductrices 19 soit lui-même détecté comme un appui significatif.

En effet, on sait que la capacité se définie proportionnellement à la surface en regard, et inversement proportionnellement à la distance d'isolant. Par conséquent, les pastilles de contact 15-1 et 15-2, très proches des électrodes de la dalle tactile 24, ont une capacité mesurable (de l'ordre d'un stylet), leur permettant d'être détectées chacune comme un appui significatif, tandis que le réseau de pistes conductrices 19 (hauteur e1 plus importante, et avec des pistes conductrices fines) a une capacité bien plus faible, lui permettant de ne pas être détecté comme un appui significatif.

Mais le réseau de pistes conductrices 19 a une autre caractéristique importante : il s'étend sur une surface plus importante que les pastilles de contact, et donc, même si sa capacité est faible, il interagit avec plusieurs nœuds de la matrice d'électrodes (intersection lignes/colonnes) de la dalle tactile. Le fait que les pistes conductrices soient reliées en réseau permet que des charges y circulent librement. Ainsi, lors des balayages capacitifs, des charges vont et viennent dans le réseau de pistes conductrices, ainsi qu'entre les pastilles de contact et le réseau de pistes conductrices. Cela change donc de façon très légère la charge du réseau de pistes conductrices et des pastilles de contact. Par conséquent, pour les nœuds concernés de la matrice d'électrodes (c'est-à-dire ceux situés en regard du réseau de pistes conductrices et des pastilles de contact), le contrôleur mesure des variations de capacité (par rapport à des valeurs de référence) qui ne sont pas fixes sur des cycles successifs, et décide donc de ne pas procéder au réétalonnage de la dalle tactile (c'est-à-dire à la modification des valeurs de référence pour les nœuds concernés). Ce non réétalonnage permet que chacune des pastilles de contact 15-1 et 15-2 continue d'être détectée comme un appui significatif.

En outre, le design proposé (réseau de pistes conductrices 19 relié électriquement aux pastilles de contact 15-1 et 15-2) présente l'intérêt d'avoir une dynamique importante pour la détection des pastilles de contact :
- dans la deuxième phase de saisie du code (qui suit la première phase de détection du dispositif de saisie, même sans appui d'un doigt sur le réseau de pistes conductrices), c'est-à-dire quand le doigt de l'utilisateur appuie sur les zones des touches (et donc est en contact avec celles-ci), ou
- dans la première phase de détection du dispositif de saisie, si le doigt de l'utilisateur est à proximité du réseau de pistes conductrices.

### 5.3 Deuxième mode de réalisation du dispositif de saisie

La **figure 10** illustre un dispositif de saisie de données 100, selon une variante du premier mode de réalisation de l'invention, au format « portrait », particulièrement adapté pour une utilisation avec des dalles tactiles également de type portrait « petit format» (pour lesquelles, le dispositif de saisie de données 1 du premier mode de réalisation, au format «paysage», ne serait pas utilisable). Son fonctionnement est exactement le même que celui du premier mode de réalisation.

Plus précisément, dans le plan de la face supérieure 17 de la plaque 30, les dix touches numériques 10-0' à 10-9' (toujours sur quatre lignes et trois colonnes) sont disposées au-dessus (et non plus à gauche) des trois touches fonctionnelles 11-1' à 11-3', elles-mêmes disposées sur une ligne (et non plus sur une colonne).

Les angles inférieurs, gauche et droite, de la face supérieure 17 de la plaque 3 ne comportent aucune touche. Ce sont dans les zones correspondantes (c'est-à-dire superposées) de la face inférieure 18 de la plaque 30 que sont positionnées les deux pastilles de contact 15-1' et 15-2'.

L'entraxe entre pastilles de contact n'est pas le même que dans le premier mode de réalisation. Ainsi, le contrôleur du terminal, qui connaît l'entraxe entre pastilles de contact de chacun des types de dispositif de saisie 1, 100, peut détecter quel type de dispositif de saisie a été apposé sur la dalle tactile (et ainsi en déduire la position de chacune des touches du dispositif de saisie apposé).

De plus, dans une implémentation particulière, un coin du dispositif de saisie (par exemple en haut à droite, voir figure 10) est biseauté et permet à l'utilisateur d'orienter, sans confusion possible, le dispositif de saisie. Ainsi, on évite que l'utilisateur place le dispositif de saisie à l'horizontale.

### 5.4 Exemple de structure du terminal

La **figure 8** présente un exemple de structure du terminal 2 de la figure 1, mettant en œuvre un procédé de saisie de données selon l'invention (par exemple le mode de réalisation particulier décrit ci-dessous en relation avec la figure 9).

Le terminal 2 comprend une dalle tactile 24 (voir description plus haut), une mémoire vive 22 (par exemple une mémoire RAM), une unité de traitement 61 (formant notamment le contrôleur (unité de contrôle) de la dalle tactile 24 ; voir description plus haut), équipée par exemple d'un processeur, et pilotée par un programme d'ordinateur 230 stocké dans une mémoire morte 23 (par exemple une mémoire ROM ou un disque dur). A l'initialisation, les instructions de code du programme d'ordinateur 230 sont par exemple chargées dans la mémoire vive 22 avant d'être exécutées par le processeur de l'unité de traitement 21.

Cette figure 8 illustre seulement une manière particulière, parmi plusieurs possibles, de réaliser l'algorithme détaillé ci-dessous en relation avec la figure 9. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

### 5.5 Exemple de procédé de saisie

La **figure 9** présente un organigramme d'un procédé selon un mode de réalisation particulier de l'invention, exécuté par le terminal 2.

Dans une étape 91 (première détection), le terminal détecte une apposition du dispositif de saisie de données 1 sur la dalle tactile 24. Cette première détection est basée sur une détection de la ou les pastilles de contact 15-1 et 15-2.

Lors de l'apposition du dispositif de saisie 1 sur la dalle tactile, le contrôleur de la dalle tactile détecte les deux (ou trois) pastilles de contact, et éventuellement un ou plusieurs appuis significatifs si l'utilisateur tient le dispositif de saisie en main et qu'un de ses doigts touche la dalle tactile. Comme expliqué plus haut, cette détection est possible car les pastilles de contact sont conductrices électriquement et en contact direct avec la dalle tactile. Le niveau de détection des pastilles de contact est acceptable car plus faible que si on appuyait avec un doigt, mais d'un niveau comparable à celui d'un stylet. On rappelle que le réseau de pistes conductrices n'est pas détecté mais permet d'éviter un réétalonnage de la dalle tactile (qui empêcherait la détection des pastilles de contact).

En outre, le(s) écartements entre pastilles de contact étant connus du contrôleur (à quelques variations près), celui-ci est capable de reconnaître que c'est un dispositif de saisie 1 qui a été posé.

Le contrôleur détermine également la position et l'orientation du dispositif de saisie 1 sur la dalle tactile. Pour l'orientation, c'est selon le nombre de pastilles de contact que possède le dispositif de saisie :
- avec trois pastilles de contact, le contrôleur sait orienter le dispositif de saisie :
- avec deux pastilles de contact, l'orientation se fait modulo 180°. Le contrôleur vérifie alors qu'au moins une position du dispositif de saisie permet d'avoir un clavier fonctionnel.

Dans une implémentation particulière, le contrôleur vérifie également que chacune des zones de saisie (touches) 10-0 à 10-9 et 11-1 à 11-3 est présente au moins partiellement dans une zone active de la dalle tactile 24. On considère par exemple que si 80% d'une touche est dans la zone active, alors c'est encore acceptable.

Chaque utilisateur peut avoir sa propre prise en main du dispositif de saisie. En effet, certaines personnes peuvent le plaquer, d'autres appuyer juste sur les touches (sans tenir le dispositif de saisie), d'autres encore le tiennent avec deux doigts et appuient sur les touches. Il est donc extrêmement important de ne pas considérer comme des appuis significatifs, les appuis qui sont en dehors du clavier, tout en identifiant quels sont les appuis des pastilles de contact (qui orientent le clavier) :
- première solution : le contrôleur de la dalle tactile enregistre tous les points détectés. Avec tous ces points, le contrôleur (ou le microprocesseur du terminal s'il n'est pas confondu avec le contrôleur) définit quels sont les points détectés qui correspondent aux pastilles de contact du dispositif de saisie, et détermine l'orientation du dispositif de saisie (et donc du clavier de celui-ci). Le contrôleur filtre ensuite les autres points détectés : soit comme devant être pris en compte, soit comme devant être oubliés (car correspondant aux doigts de prise en main). Le corolaire est que, plus on est capable d'acquérir des points détectés, plus on est tolérant sur les points détectés hors clavier. De plus, le fait d'utiliser trois pastilles de contact permet de s'affranchir de « faux dispositifs de saisie », comme par exemple le fait de tenir le dispositif de saisie avec deux doigts espacés de l'entraxe prévu entre deux pastilles de contact.
- deuxième solution : le contrôleur garde en mémoire les positions des pastilles de contact lors de la pose (on suppose qu'on a un nombre réduit de doigts « parasites » lors de cette pose). Dans ce cas, avec ces positions mémorisées, et en considérant que les mouvements du dispositif de saisie ne peuvent être que lents (moins de 40 mm/s, par exemple), on évite les confusions de position.

Dans une étape 92, si les déterminations et vérifications de l'étape 91 ont été effectuées avec succès, le terminal bascule dans un mode de saisie adapté au dispositif de saisie de données (appelé ci-après « mode aveugle »). Pour acquiescer la bonne présence du dispositif de saisie et confirmer à l'utilisateur le basculement dans le mode aveugle, une notification sonore est émise par le terminal. De plus, afin de sécuriser la phase suivante de saisie de données, le terminal efface le clavier virtuel sur la dalle tactile. En outre, dans le mode aveugle, le paramétrage de la dalle tactile est par exemple tel qu'il permet de détecter des niveaux plus faibles lors de la saisie du code PIN. Ceci permet de compenser, si nécessaire, le fait que le doigt de l'utilisateur est en contact avec la dalle tactile 24 via le dispositif de saisie 1.

Dans une étape 93 (deuxième détection), le terminal détecte une saisie de données par l'utilisateur. Cette deuxième détection est basée sur la détection d'un ou plusieurs appuis d'un doigt de l'utilisateur sur les touches du dispositif de saisie. Typiquement, pour la saisie d'un code confidentiel (code PIN), le contrôleur détecte quatre appuis successifs sur les touches de chiffres 10-0 à 10-9, suivis d'un appui sur la touche de validation 11-3. A la sortie de la saisie du code PIN, on bascule à nouveau dans un paramétrage standard (« mode normal »).

La saisie d'une touche en mode aveugle respecte par exemple les règles suivantes, gérées par le contrôleur :
- tout appui hors du gabarit du dispositif de saisie est filtré (c'est-à-dire non retenu comme un appui significatif). Cela peut, notamment être dû à l'utilisateur qui tient le dispositif de saisie, ou a des effets de paume ;
- la sélection de la touche se fait à l'enlèvement du doigt (si on est dans la même touche que précédemment) ;
- on filtre les appuis inférieurs à une certaine durée de référence (par exemple comprise entre 1000 et 3000ms). Cela permet notamment à l'utilisateur de chercher le point cinq, sans l'activer, puis de saisir son code. En revanche, pour un appui supérieur à la durée de référence, la touche appuyée est considérée comme appuyée (appui significatif) et on a un retour sonore (ou tactile) ;
- si on appuie sur deux touches, ou plus, de façon simultanée (ce qui peut être le cas quand une personne aveugle cherche les touches, ou encore d'une personne se repérant « par colonne ») alors, les appuis sont ignorés ;
- tout appui de touche est acquitté par un retour sonore (ou tactile) (ce signal d'acquittement est par exemple identique, quelle que soit la touche appuyée).

Une autre façon de filtrer les appuis est d'avoir une détection de force. Dans ce cas, il n'est pas nécessaire d'avoir un filtrage sur la durée d'appui. En complément ou non de la détection de force, on peut ajouter un effet haptique au clavier.

La sortie du mode aveugle peut se faire de plusieurs façons. Si une pastille de contact n'est plus détectée par le contrôleur ou si le contrôleur détecte que les touches ne sont plus dans la zone active de la dalle tactile, on notifie à l'utilisateur, par exemple par un retour sonore « négatif » (long grave) que l'on sort du mode aveugle, et qu'on retourne à un affichage selon le mode classique.

Si l'utilisateur a fini d'entrer son code et que le code est bon, une notification « positive » est envoyée (par exemple de type « double bref aigu »), sinon (code faux) une notification « négative » en envoyée (par exemple de type « triple grave long »). Ainsi, pour identifier des messages différents, on utilise des signaux ayant non seulement une fréquence (note) différente, mais aussi un rythme différent.

Avec la méthode proposée, le dispositif de saisie peut bouger et l'on est toujours capable de le détecter (avec son orientation) et donc de définir la ou les touches appuyées. De plus, on peut même enlever le dispositif de saisie puis le repositionner différemment sur la dalle tactile (même tourné de 180°), et cela continue à fonctionner.

## Revendications

1. Système de saisie de données comprenant une dalle tactile (24) d'un terminal (2) et un dispositif de saisie de données (1) destiné à être apposé sur ladite dalle tactile, ladite dalle tactile étant capacitive, comprenant des électrodes en lignes et en colonnes formant une matrice d'électrodes comprenant des nœuds, et étant pilotée par une unité de contrôle (21) configurée pour effectuer des cycles de balayage capacitif et de mesure des variations de capacité des nœuds par rapport à des valeurs de référence, détecter des appuis significatifs sur la dalle tactile en fonction des variations de capacité mesurées, et ré-étalonner les valeurs de référence en fonction des variations de capacité mesurées, **caractérisé en ce qu'**il comprend :
• une plaque (30) globalement parallélépipédique comprenant une face inférieure (18), globalement plane, d'apposition du dispositif sur la dalle tactile, et une face supérieure (17) comprenant une matrice de zones de saisie (10-0 à 10-9 et 11-1 à 11-3) formant clavier, les zones de saisie ayant une épaisseur (e2) configurée pour permettre une détection d'un doigt par la dalle tactile quand le dispositif est apposé sur la dalle tactile ;
• au moins une pastille de contact (15-1 à 15-3), plane, conductrice électriquement et solidaire de la face inférieure, ladite au moins une pastille de contact ayant une capacité lui permettant d'être détectée comme appui significatif ; et
• un réseau de pistes conductrices (19), s'étendant sur au moins une partie de la face supérieure et étant relié électriquement à ladite au moins une pastille de contact, le réseau de pistes conductrices ayant une capacité lui permettant de ne pas être détecté comme appui significatif et occupant une surface d'une part plus grande que la surface occupée par ladite au moins une pastille de contact et d'autre part suffisante pour que, lors des cycles de balayage capacitif,_le réseau de pistes conductrices interagisse avec plusieurs nœuds de la matrice d'électrodes sous la forme de charges qui vont et viennent dans le réseau de pistes conductrices ainsi qu'entre ladite au moins une pastille de contact et le réseau de pistes conductrices, ce qui change la charge du réseau de pistes conductrices et de ladite au moins une pastille de contact et par conséquent, pour les nœuds de la matrice d'électrodes situés en regard du réseau de pistes conductrices et de ladite au moins une pastille de contact, dits nœuds concernés, l'unité de contrôle mesure des variations de capacité qui ne sont pas fixes sur des cycles successifs et décide donc de ne pas procéder à un réétalonnage des valeurs de référence pour les nœuds concernés.

2. Système selon la revendication 1, **caractérisé en ce que** la face inférieure comprend au moins deux pastilles de contact (15-1 à 15-3).

3. Système selon la revendication 2, **caractérisé en ce que** lesdites au moins deux pastilles de contact (15-1, 15-2') possèdent des formes différentes.

4. Système selon la revendication 1, **caractérisé en ce que** la face inférieure comprend au moins trois pastilles de contact (15-1 à 15-3).

5. Système selon l'une quelconque des revendications 1 à 4, **caractérisé en ce que** la matrice de zones de saisie formant clavier comprend un ensemble de touches de saisie qui sont globalement planes, formées sur la surface supérieure et séparées entre elles par une grille de profilés (P1 à P4) de hauteurs et/ou de formes prédéterminées, et **en ce que** le réseau de pistes conductrices (19) est formé en partie haute de la grille de profilés.

6. Système selon l'une quelconque des revendications 1 à 5, **caractérisé en ce que** le réseau de pistes conductrices (19) et la face inférieure (18) sont séparés par une distance (e1) comprise entre 1,5 mm et 4,5 mm, et **en ce que** les pistes conductrices possèdent une largeur comprise entre 0,5 mm et 2 mm.

7. Système selon l'une quelconque des revendications 1 à 6, **caractérisé en ce que** la face inférieure comprend au moins deux pastilles de contact, et **en ce que** le réseau de pistes conductrices possède une résistance, entre pastilles de contact, comprise entre 20 Ω et 150 kΩ.

8. Système selon l'une quelconque des revendications 1 à 7, **caractérisé en ce que** le réseau de pistes conductrices (19) est imprimé sur la face supérieure et recouvert d'une couche non conductrice, protectrice contre l'abrasion.

9. Système selon l'une quelconque des revendications 1 à 7, **caractérisé en ce que** le réseau de pistes conductrices est réalisé en matière conductrice épaisse ayant une épaisseur d'au moins 0,3 mm.

10. Système selon l'une quelconque des revendications 1 à 9, **caractérisé en ce que** la plaque (30) est constituée d'une matière isolante électriquement.

11. Système selon l'une quelconque des revendications 1 à 10, **caractérisé en ce que** la plaque (30) est constituée de matière plastique rigide et transparente.

12. Système selon la revendication 11, **caractérisé en ce que** la face inférieure (18) possède quatre angles et comprend, dans au moins deux angles adjacents parmi lesdits angles, un pied (16-1 à 16-4) globalement plan d'épaisseur comprise entre 0,1 et 0,4 mm.

13. Système selon l'une quelconque des revendications 1 à 10, **caractérisé en ce que** la plaque (30) est constituée de silicone translucide, permettant de se déformer et de s'adapter parfaitement à la planéité de la dalle tactile.

14. Système selon l'une quelconque des revendications 1 à 13, **caractérisé en ce qu'**il comprend au moins une ventouse (40) et/ou au moins un pied anti-glissement (16-1' et 16-2') réalisé(s) dans un matériau antidérapant, solidaire(s) de la face inférieure et destiné(s) à venir en contact avec la dalle tactile.

15. Système selon l'une quelconque des revendications 1 à 14, **caractérisé en ce que** la matrice de zones de saisie (10-0 à 10-9 et 11-1 à 11-3) formant clavier est représentative d'un clavier de saisie d'un code confidentiel sur un terminal de paiement.

## Patentansprüche

1. Dateneingabesystem, umfassend einen Touchscreen (24) eines Endgeräts (2) und eine Dateneingabevorrichtung (1), die dazu bestimmt ist, auf dem Touchscreen aufgelegt zu werden, wobei der Touchscreen kapazitiv ist und Zeilen- und Spaltenelektroden aufweist, die eine Elektrodenmatrix bilden, die Knoten aufweist, und von einer Steuereinheit (21) gesteuert wird, die konfiguriert ist, um Zyklen des kapazitiven Abtastens und des Messens der Kapazitätsänderungen der Knoten in Bezug auf Referenzwerte durchzuführen, signifikante Auflagen auf dem Touchscreen in Abhängigkeit von den gemessenen Kapazitätsänderungen zu erfassen und die Referenzwerte in Abhängigkeit von den gemessenen Kapazitätsänderungen neu zu kalibrieren, **dadurch gekennzeichnet, dass** es aufweist:
• eine im Allgemeinen quaderförmige Platte (30), umfassend eine im Allgemeinen flache Unterseite (18) zum Auflegen der Vorrichtung auf den Touchscreen, und eine Oberseite (17), umfassend eine Matrix mit Eingabefeldern (10-0 bis 10-9 und 11-1 bis 11-3), die eine Tastatur bildet, wobei die Eingabefelder eine Dicke (e2) aufweisen, die konfiguriert ist, um ein Erfassen eines Fingers durch den Touchscreen zu ermöglichen, wenn die Vorrichtung auf dem Touchscreen aufgelegt ist,
• mindestens ein flaches Kontaktpad (15-1 bis 15-3), das elektrisch leitend und mit der Unterseite fest verbunden ist, wobei das mindestens eine Kontaktpad eine Kapazität aufweist, die es ihm ermöglicht, als signifikante Auflage erfasst zu werden, und
• ein Leiterbahnennetz (19), das sich über mindestens einen Teil der Oberseite erstreckt und elektrisch mit dem mindestens einen Kontaktpad verbunden ist, wobei das Leiterbahnennetz eine Kapazität aufweist, die es ihm ermöglicht, nicht als signifikante Auflage erfasst zu werden, und eine Fläche einnimmt, die einerseits größer als die Fläche ist, die von dem mindestens einen Kontaktpad eingenommen wird, und andererseits ausreichend ist, damit das Leiterbahnennetz bei den Zyklen des kapazitiven Abtastens mit mehreren Knoten der Elektrodenmatrix in Form von Ladungen interagiert, die sich in dem Leiterbahnennetz und zwischen dem mindestens einen Kontaktpad und dem Leiterbahnennetz hin und her bewegen, wodurch die Ladung des Leiterbahnennetzes und dem mindestens einen Kontaktpad geändert wird und folglich die Steuereinheit für die Knoten der Elektrodenmatrix, die dem Leiterbahnennetz und dem mindestens einen Kontaktpad gegenüber liegen, die betreffende Knoten genannt werden, Kapazitätsänderungen in aufeinanderfolgenden Zyklen, die nicht festgelegt sind, misst und somit entscheidet, keine Neukalibrierung der Referenzwerte für die betreffenden Knoten vorzunehmen.

2. System nach Anspruch 1, **dadurch gekennzeichnet, dass** die Unterseite mindestens zwei Kontaktpads (15-1 bis 15-3) aufweist.

3. System nach Anspruch 2, **dadurch gekennzeichnet, dass** die mindestens zwei Kontaktpads (15-1 bis 15-2') verschiedene Formen aufweisen.

4. System nach Anspruch 1, **dadurch gekennzeichnet, dass** die Unterseite mindestens drei Kontaktpads (15-1 bis 15-3) aufweist.

5. System nach einem der Ansprüche 1 bis 4, **dadurch gekennzeichnet, dass** die Matrix mit Eingabefeldern, die eine Tastatur bildet, einen Satz von Eingabetasten aufweist, die im Allgemeinen flach sind, die auf der Oberseite gebildet sind und voneinander durch ein Profilraster (P1 bis P4) mit vorbestimmten Höhen und/oder Formen getrennt sind, und dadurch, dass das Leiterbahnennetz (19) im oberen Teil aus dem Profilraster gebildet ist.

6. System nach einem der Ansprüche 1 bis 5, **dadurch gekennzeichnet, dass** das Leiterbahnennetz (19) und die Unterseite (18) durch einen Abstand (e1) getrennt sind, der zwischen 1,5 mm und 4,5 mm beträgt, und dadurch, dass die Leiterbahnen eine Breite aufweisen, die zwischen 0,5 mm und 2 mm beträgt.

7. System nach Anspruch 1 bis 6, **dadurch gekennzeichnet, dass** die Unterseite mindestens zwei Kontaktpads aufweist und dadurch, dass das Leiterbahnennetz einen Widerstand zwischen Kontaktpads aufweist, der zwischen 20 Ω und 150 kΩ beträgt.

8. System nach einem der Ansprüche 1 bis 7, **dadurch gekennzeichnet, dass** das Leiterbahnennetz (19) auf der Oberseite gedruckt ist und von einer nichtleitenden, abriebfesten Schicht bedeckt ist.

9. System nach einem der Ansprüche 1 bis 7, **dadurch gekennzeichnet, dass** das Leiterbahnennetz aus einem dicken leitfähigen Material hergestellt ist, das eine Dicke von mindestens 0,3 mm aufweist.

10. System nach einem der Ansprüche 1 bis 9, **dadurch gekennzeichnet, dass** die Platte (30) aus einem elektrisch isolierenden Material gebildet ist.

11. System nach einem der Ansprüche 1 bis 10, **dadurch gekennzeichnet, dass** die Platte (30) aus einem starren und transparenten Kunststoffmaterial gebildet ist.

12. System nach Anspruch 11, **dadurch gekennzeichnet, dass** die Unterseite (18) vier Ecken besitzt und in mindestens zwei benachbarten Ecken unter den Ecken einen im Allgemeinen flachen Fuß (16-1 bis 16-4) von einer Dicke zwischen 0,1 und 0,4 mm aufweist.

13. System nach einem der Ansprüche 1 bis 10, **dadurch gekennzeichnet, dass** die Platte (30) aus transluzentem Silikon gebildet ist, das sich verformen und perfekt an die Flachheit des Touchscreens anpassen kann.

14. System nach einem der Ansprüche 1 bis 13, **dadurch gekennzeichnet, dass** es mindestens einen Saugnapf (40) und/oder mindestens einen Antirutsch-Fuß (16-1' und 16-2') aufweist, der (die) aus einem rutschfesten Material erstellt ist (sind), der (die) mit der Unterseite fest verbunden ist (sind) und dazu bestimmt ist (sind), mit dem Touchscreen in Kontakt zu kommen.

15. System nach einem der Ansprüche 1 bis 14, **dadurch gekennzeichnet, dass** die Matrix mit Eingabefeldern (10-0 bis 10-9 und 11-1 bis 11-3), die eine Tastatur bildet, für eine Eingabetastatur eines Geheimcodes auf einem Zahlungsendgerät repräsentativ ist.

## Claims

1. System of data entry comprising a touch panel (24) of a terminal (2) and a data-entry device (1) intended to be placed on said touch panel, said touch panel being capacitive, comprising electrodes in rows and columns forming a matrix of electrodes comprising nodes and being managed by a control unit (21) configured to carry out cycles of capacitive scanning and measurement of variance of capacitance of the nodes relative to reference values, detect meaningful touches on the touch panel as a function of the measured variations in capacitance and recalibrate the reference values as a function of the measured variations in capacitance, **characterized in that** it comprises:
• a generally parallelepiped-shaped plate (30) comprising a generally flat lower face (18), for placing the device on the touch panel; and an upper face (17) comprising a keypad-forming matrix of entry zones (10-0 to 10-9 and 11-1 to 11-3), the entry zones having a thickness (e2) configured to enable a detection of a finger by the touch panel when the device is placed on the touch panel;
• at least one flat, contact pad (15-1 to 15-3) that is electrically conductive and fixedly attached to the lower face, said at least one contact pad having a capacitance enabling it to be detected as a meaningful touch; and
• a network of conductive tracks (19) stretching over at least a part of the upper face and being electrically connected to said at least one contact pad, the network of conductive tracks having a capacitance such that it is not detected as exerting a meaningful touch, and occupying a surface area that is, on the one hand, greater than the surface area occupied by said at least one contact pad and, on the other hand, sufficient so that, during the capacitive scanning cycles, the network of conductive tracks interacts with several nodes of the matrix of electrodes in the form of charges that go back and forth in the network of conductive tracks, as well as between said at least one contact pad and the network of conductive tracks, thus changing the charge of the network of conductive tracks and of said at least one contact pad and, therefore, for the nodes of the matrix of electrodes, situated facing the network of conductive tracks and said at least one conductive pad, called concerned nodes, the control unit measures the variations in capacitance that are not fixed on successive cycles and decides therefore not to carry out a recalibration of the reference values for the nodes concerned.

2. System according to claim 1, **characterized in that** the lower face comprises at least two contact pads (15-1 to 15-3).

3. System according to claim 2, **characterized in that** said at least two contact pads (15-1, 15-2') possess different shapes.

4. System according to claim 1, **characterized in that** the lower face comprises at least three contact pads (15-1 to 15-3).

5. System according to any one of the claims 1 to 4, **characterized in that** the keypad-forming matrix of entry zones comprises a set of entry keys that are generally flat, formed on the upper surface and separated from each other by a grid of shaped structures (P1 to P4) of predetermined height and/or shape, and **in that** the network of conductive tracks is formed at the upper part of the grid of shaped structures.

6. System according to any one of the claims 1 à 5, **characterized in that** the network of conductive tracks and the lower face (18) are separated by a distance (e1) of 1.5 mm to 4.5 mm and **in that** the conductive tracks possess a width of 0.5 mm to 2 mm.

7. System according to any one of the claims 1 to 6, **characterized in that** the lower face comprises at least two contact pads and **in that** the network of conductive tracks possesses a resistance, between the contact pads, of 20 Ω to 150 kQ.

8. System according to any one of the claims 1 to 7, **characterized in that** the network of conductive tracks (19) is printed on the upper face and covered with a nonconductive, anti-abrasion layer.

9. System according to any one of the claims 1 to 7, **characterized in that** the network of conductive tracks is made of a thick conductive material having a thickness of at least 0.3 mm.

10. System according to any one of the claims 1 to 9, **characterized in that** the plate (30) is constituted by an electrically insulating matrix.

11. System according to any one of the claims 1 to 10, **characterized in that** the plate (30) is constituted by a rigid and transparent plastic material.

12. System according to claim 11, **characterized in that** the lower face (18) possesses four corners and, in at least two adjacent corners among said corners, it possesses a generally flat foot (16-1 to 16-4) with a thickness of 0.1 to 0.4 mm.

13. System according to any one of the claims 1 to 10, **characterized in that** the plate (30) is constituted by translucent silicone enabling it to change shape and perfectly match the flatness of the touch panel.

14. System according to any one of the claims 1 to 13, **characterized in that** it comprises at least one suction pad (40) and/or at least one anti-slip foot (16-1' and 16-2') made out of an anti-skid material fixedly attached to the lower face and intended to come into contact with the touch panel.

15. System according to any one of the claims 1 to 14, **characterized in** the keypad-forming matric of entry zones (10-0 to 0-9 et 11-1 to 11-3) represents a keypad for entering a confidential code into a payment terminal.
